# EUROPÄISCHE PATENTSCHRIFT

(11) **EP 2 195 692 B1**
(45) Veröffentlichungstag und Bekanntmachung des Hinweises auf die Patenterteilung: **31.08.2011**
(21) Anmeldenummer: 09748985.0
(22) Anmeldetag: 07.10.2009
(51) Int. Cl.: G02B 6/12, G02B 6/122, G02B 6/30, G02B 6/42

(54) **WELLENLEITERANORDNUNG UND INTEGRIERTE OPTIK MIT HERSTELLUNGSVERFAHREN**
WAVEGUIDE DEVICE AND INTEGRATED LENS WITH MANUFACTURING METHOD
ENSEMBLE GUIDES D'ONDES ET OPTIQUE INTÉGRÉE, PROCÉDÉ DE PRODUCTION

(30) Priorität: 09.10.2008 DE 102008050766
(43) Veröffentlichungstag der Anmeldung: 16.06.2010
(73) Patentinhaber: Fraunhofer-Gesellschaft zur Förderung der angewandten Forschung, 80686 München (DE)
(72) Erfinder: HEIDRICH, Helmut, 12357 Berlin (DE); LÜTZOW, Peter, 10781 Berlin (DE)
(74) Vertreter: Pfenning, Meinig & Partner GbR
(86) Internationale Anmeldenummer: PCT/EP2009/007303
(87) Internationale Veröffentlichungsnummer: WO 2010/040566

(56) Entgegenhaltungen:
- WO-A1-2007/007073
- GB-A- 2 112 956
- US-A1- 2001 053 260
- US-A1- 2004 184 704
- US-A1- 2008 213 934
- PAOLO DAINESI ET AL.: "Scaling SOI photonics to micron and sub-micron devices" PROCEEDINGS OF SPIE OPTO IRELAND 2005:NANOTECHNOLOGY AND NANOPHOTONICS, Bd. 5824, 5. April 2005 (2005-04-05), XP040205190 SPIE, PO BOX 10 BELLINGHAM WA 98227-0010 USA

## Beschreibung

Die Erfindung betrifft eine Wellenleiteranordnung nach dem Oberbegriff des Hauptanspruchs sowie eine integrierte Optik, die eine derartige Wellenleiteranordnung umfasst und ein Herstellungsverfahren für ein entsprechendes optisches Bauelement.

Eine gattungsgemäße Wellenleiteranordnung umfasst ein beispielsweise aus einem Halbleiter gebildetes Substrat, eine auf dem Substrat angeordnete optische Pufferschicht und mindestens einen auf der Pufferschicht angeordneten Wellenleiter mit einem parallel zur Pufferschicht verlaufenden und typischerweise aus einem hochbrechenden Material gebildeten Wellenleiterkern, wobei der mindestens eine Wellenleiter mindestens ein Ende zum Ein- oder Auskoppeln von - nicht notwendigerweise sichtbarem - Licht aufweist. Eine solche Wellenleiteranordnung kann z.B. als integrierte optische Schaltung dienen, wobei der Wellenleiter insbesondere mit sehr kleinen Abmessungen im Submikrometerbereich ausgeführt sein kann. Derartige Wellenleiter, die auch als "photonic wires" bezeichnet werden, sind insbesondere geeignet, eine Einmodigkeit transportierten Lichts zu erreichen.

Da Wellenleiter einer solchen Wellenleiteranordnung also typischerweise einen ausgesprochen geringen Querschnitt haben, der insbesondere viel kleiner ist als beispielsweise ein Kernquerschnitt einer gewöhnlichen Einmodenglasfaser, sind besondere Maßnahmen erforderlich, um eine optische Kopplung der Wellenleiteranordnung an andere optische Komponenten, also ein Ein- oder Auskoppeln von Licht an dem mindestens einen Ende des mindestens einen Wellenleiters, auf hinreichend effiziente Weise zu realisieren, also ohne zu hohe Leistungsverluste.

Aus dem Stand der Technik sind dazu Maßnahmen bekannt, ein Profil eines in einem sehr kleinen Wellenleiter transportierten Lichtbündels an dessen Ende so aufzuweiten, dass eine optische Kopplung des Wellenleiters beispielsweise an eine dickere Lichtleitfaser ohne allzu große Verluste möglich ist. Dazu sind z.B. kontinuierliche Querschnittsänderungen des Wellenleiters zu dessen Ende hin vorgeschlagen worden. Diese Lösungen bringen jedoch den Nachteil mit sich, dass ein Ein- und Auskoppeln von Licht nur in Richtungen möglich ist, die in einer durch das Substrat definierten Ebene liegen. Das Ein- und Auskoppeln kann dann nur an Stirnflächen der jeweiligen Wellenleiteranordnung erfolgen. Bei einer Herstellung entsprechende Wellenleiteranordnung auf Basis eines Wafers kann die Wellenleiteranordnung daher erst dann geprüft werden, wenn diese aus dem Wafer herausgetrennt und die jeweilige Stirnfläche geglättet worden ist. Ausschuss erzeugende Fehler lassen sich so erst ausgesprochen spät im Lauf der Herstellung der Wellenleiteranordnung feststellen, was netto zu nachteilig hohen Herstellungskosten führt. Auch sind der Komplexität für die verbleibenden fehlerfreien Wellenleiteranordnungen integrierter optischer Schaltungen nachteilig enge Grenzen gesetzt, wenn ein Ein- und Auskoppeln von Licht nur in der durch das Substrat definierten Ebene möglich ist.

Um die geschilderten Nachteile zu vermeiden, sind optische Schnittstellen zum vertikalen Ein- und Auskoppeln von Licht vorgeschlagen worden, bei denen der jeweilige Wellenleiter in einer Gitterstruktur endet, an der aufgrund von Beugungserscheinungen eine zumindest teilweise Umlenkung von in dem Wellenleiter transportiertem Licht erreicht wird. Da diese Gitterstrukturen mit ausgesprochen hoher Präzision ausgeführt werden müssen, ist diese Lösung ebenfalls mit einem nachteilig hohen Herstellungsaufwand verbunden. Darüber hinaus sind derartige optische Schnittstellen aufgrund der Wellenlängenabhängigkeit von Beugungen an einem Gitter nur für Licht aus einem nachteilig engen Wellenlängenband brauchbar.

Dokument US2004/0187704 A1 offenbart einen Wellenleiter, der durch ein Wellenleiterstück fortgesetzt ist, das oberhalb des selben Substrats aus einer durch das Substrat definierten Ebene heraus gekrümmt verläuft und an einem vom Substrat wegweisenden Ende durch eine Koppelfläche abgeschlossen wird. Das Wellenleiterstück ruht momentan auf einer gekrümmten Blockform.

Der Erfindung liegt also die Aufgabe zugrunde, eine entsprechende Wellenleiteranordnung vorzuschlagen, die ein möglichst wellenlängenunabhängiges Ein- oder Auskoppeln von Licht an mindestens einem Ende mindestens eines Wellenleiters erlaubt und gleichzeitig mit einem vergleichsweise geringen Aufwand herstellbar ist. Der Erfindung liegt ferner die Aufgabe zugrunde, eine integrierte Optik zu entwickeln, die diese angestrebten Vorzüge zeigt, sowie ein möglichst aufwandsarmes Herstellungsverfahren für ein entsprechendes optisches Bauelement.

Diese Aufgabe wird erfindungsgemäß gelöst durch eine Wellenleiteranordnung mit den kennzeichnenden Merkma-len des Hauptanspruchs in Verbindung mit den Merkmalen des Oberbegriffs des Hauptanspruchs sowie durch eine integrierte Optik gemäß Anspruch 13 und ein Herstellungsverfahren mit dem Merkmalen des Anspruchs 14. Vorteilhafte Ausgestaltungen und Weiterentwicklungen der Erfindung ergeben sich mit den Merkmalen der Unteransprüche.

Bei der vorgeschlagenen Wellenleiteranordnung ist der Wellenleiterkern also an dem genannten Ende fortgesetzt durch ein Wellenleiterstück, das aus einer durch das Substrat definierten Ebene herausgekrümmt verläuft und auf einer entsprechend gekrümmten Rampe ruht. Typischerweise hat das Wellenleiterstück, das an den Wellenleiter angesetzt oder einstückig mit diesem ausgeführt sein kann, dabei einen vom Substrat weg gekrümmten Verlauf.

Dadurch wird mit sehr geringem konstruktivem Aufwand erreicht, dass über das den Wellenleiterkern fortsetzende Wellenleiterstück aus einer gegenüber dem Wellenleiter und dem Substrat gekippten Richtung Licht in den Wellenleiter eingekoppelt oder dementsprechend in diese Richtung aus dem Wellenleiter ausgekoppelt werden kann, und zwar sowohl mit einer ausgesprochen hohen Ausbeute, als auch weitgehend unabhängig von einer Wellenlänge oder einer Wellenlängenverteilung des Lichts. Vorzugsweise ist dabei ein dem Wellenleiterkern abgewandtes, vom Substrat weg weisendes Ende des genannten Wellenleiterstücks gegenüber einer Längsachse des Wellenleiters und einer durch das Substrat definierten Ebene um zwischen 80° und 90° geneigt, um ein möglichst vertikales Ein- und Auskoppeln von Licht zu ermöglichen.

Ein entscheidender Vorteil der vorgeschlagenen Wellenleiteranordnung ist darin zu sehen, dass sich das Ende des Wellenleiters, an dem Licht ein- oder ausgekoppelt werden kann, nicht notwendigerweise an einem Rand des Substrats befinden muss. Dass ist insbesondere in dem typischen Fall vorteilhaft, dass das Substrat durch einen Wafer oder einen Teil eines Wafers gebildet ist. Dann kann die Wellenleiteranordnung, bei der es sich um eine integrierte Optik oder ein anderes optisches Bauelement handeln kann, nämlich auf ihre optischen Eigenschaften geprüft werden, noch bevor das Substrat dieser Wellenleiteranordnung aus dem größeren Wafer herausgetrennt wird. Eine Prüfung der Wellenleiteranordnung kann daher zusammen mit der Prüfung einer großen Zahl weiterer, gleichzeitig hergestellter Wellenleiteranordnungen bereits auf Waferebene erfolgen, bevor dieser zersägt wird. Diese Prüfung der Wellenleiteranordnung auf ihre optischen Eigenschaften kann so vorzugsweise im Rahmen einer standardmäßigen Qualitätsüberprüfung des Wafers erfolgen.

Typischerweise wird die Rampe einen zwischen dem Wellenleiterstück und der Pufferschicht oder dem Substrat verbleibenden Zwischenraum vollständig ausfüllen, um das gekrümmte Wellenleiterstück abzustützen und der Anordnung so die nötige Stabilität zu verleihen. Dabei ist das genannte Wellenleiterstück vorzugsweise ringsum eingebettet, wozu eine weitere Schicht als Abdeckschicht vorgesehen sein kann, die nicht nur den Wellenleiterkern, sondern auch das gekrümmte Wellenleiterstück abdeckt.

Um das Ein- oder Auskoppeln von Licht zu ermöglichen, wird das genannte Wellenleiterstück an einem vom Substrat weg weisenden Ende vorzugsweise durch eine Koppelfläche abgeschlossen, die am besten parallel zum Substrat liegt, so dass das Licht senkrecht zum Substrat in das Wellenleiterstück eingekoppelt oder aus diesem ausgekoppelt werden kann. Diese Koppelfläche kann auch durch eine über dem Ende des Wellenleiterstücks liegende weitere Schicht gebildet sein.

Das Substrat kann insbesondere aus Silizium gebildet sein, was einen Rückgriff auf gut erprobte Herstellungsschritte aus der SOI-Technologie erlaubt. Stattdessen kann das Substrat aber auch aus einem anderen Halbleiter oder Dielektrikum gebildet sein. Die Pufferschicht kann beispielsweise aus SiO₂ gebildet sein oder aus einem anderen Dielektrikum, das einen kleineren Brechungsindex hat als der Wellenleiterkern.

Der Wellenleiterkern kann aus einer über der Pufferschicht angeordneten Wellenleiterschicht gebildet sein. Ein zur Bildung des Wellenleiterkerns gut geeignetes Material ist - insbesondere aufgrund des relativ großen Wertes seines Brechungsindex im IR-Bereich - ebenfalls Silizium, wobei der Wellenleiterkern vorzugsweise aus kristallinem Silizium gebildet ist. Insbesondere in diesem Fall ist es vorteilhaft, das den Wellenleiterkern fortsetzende Wellenleiterstück aus amorphem Silizium zu bilden, das sich gut auf die Rampe auftragen lässt, auf dem das Wellenleiterstück ruhen soll. Durch die Verwendung von amorphem Silizium wird dann gleichzeitig ein nachteiliger Brechungsindexsprung zwischen dem Wellenleiterkern und dem ihn fortsetzenden Wellenleiterstück vermieden. Statt Silizium können aber auch andere Materialien zur Bildung des Wellenleiterkerns und des Wellenleiterstücks verwendet werden, vorzugsweise Materialien mit einem Brechungsindex von zwischen 1,5 und 4.

Im Hinblick auf möglichst geringe Ausdehnungen einerseits und eine möglichst verlustfreie Ein- oder Auskopplung von Licht andererseits ist es vorteilhaft, wenn das Wellenleiterstück einen Krümmungsradius von zwischen 1 µm und 10 µm hat.

Bei vorteilhaften Ausgestaltungen der Erfindung hat der Wellenleiterkern einen Durchmesser von zwischen 0,1 µm und 0,5 µm hat. Das kann sowohl für einen lateralen Durchmesser des Wellenleiterkerns als auch für den Durchmesser in einer zum Substrat senkrechten Richtung gelten. Wellenleiter mit Wellenleiterkernen derartiger Abmessungen können als sogenannte "photonic wires" einmodig sein, was für optische Schaltungen von Vorteil ist.

Die Rampe, auf der das Wellenleiterstück ruht, kann z.B. aus SiO₂ oder einem Photolack oder Benzozyklobuten oder aus einem anderen Polymer gebildet sein, das einen kleineren Brechungsindex hat als das den Wellenleiterkern fortsetzende Wellenleiterstück, um eine Wellenführung längs des Wellenleiterstücks zu ermöglichen.

Das Wellenleiterstück und/oder der Wellenleiterkern kann auch durch ein Material, das einen kleineren Brechungsindex hat als der Wellenleiterkern und das Wellenleiterstück, abgedeckt sein. Damit kann ein guter Schutz des Wellenleiters und des Endes zum Ein- oder Auskoppeln von Licht erreicht werden und ein im Wellenleiterkern transportiertes Lichtbündel vorteilhaft beeinflusst werden.

Schließlich kann das vorzugsweise vollständig eingebettete Wellenleiterstück, das den Wellenleiterkern fortsetzt, zum dem Wellenleiterkern abgewandten Ende hin verjüngt ausgeführt sein. Dadurch kann eine kontrollierte Aufweitung eines aus dem Wellenleiterkern austretenden Lichtbündels erreicht werden, was eine verlustärmere Auskopplung in einen Lichtleiter größeren Durchmessers - beispielsweise eine Glasfaser - erlaubt.

Bei einem vorteilhaft einfachen Herstellungsverfahren für ein optisches Bauelement beschriebener Art, bei dem zunächst zur Bildung mindestens eines Wellenleiters ein Wellenleiterkern auf einer den Wellenleiterkern von einem Substrat trennenden Pufferschicht angeordnet wird, werden zur Bildung einer optischen Schnittstelle zum Ein- oder Auskoppeln von Licht in den Wellenleiter folgende Schritte durchgeführt:
- Strukturieren einer gekrümmten Rampe in dem Substrat und/oder in einem zuvor auf dem Substrat aufgetragenen strukturierbaren Trägermaterial durch einen Ätzprozess,
- Beschichten der Rampe mit einem Wellenleitermaterial, so dass das Wellenleitermaterial ein Wellenleiterstück zum Ein- oder Auskoppeln von Licht bildet, das aus einer durch das Substrat definierten Ebene herausgekrümmt, typischerweise vom Substrat weg gekrümmt, verläuft und den Wellenleiterkern fortsetzt.

Dabei kann das genannte Wellenleitermaterial unter Umständen auch zur Bildung des Wellenleiterkerns dienen, der dann erst in einem weiteren Arbeitsschritt durch Strukturieren einer aus dem Wellenleitermaterial gebildeten Wellenleiterschicht geformt wird. Alternativ kann der Wellenleiterkern - damit sei hier der in Substratebene verlaufende Teil eines Kerns des Wellenleiters bezeichnet - schon vorher aus dem gleichen oder einem anderen Material gebildet worden sein. Bei dem Ätzprozess zur Bildung der Rampe kann es sich z.B. um einen isotropen Ätzprozess handeln. Alternativ kann auch eine Graumaskentechnik zum Ätzen der Rampe verwendet werden.

Eine besonders einfach und mit geringem Ausschuss realisierbare Ausführung des Verfahrens sieht vor, dass zur Bildung der optischen Schnittstelle im Einzelnen folgende Schritte durchgeführt werden:
- Aufbringen eines strukturierbaren Trägermaterials über dem Substrat, wobei das - u.U. dem Material der Pufferschicht entsprechende - Trägermaterial z.B. durch die Pufferschicht vom Substrat getrennt bleiben kann,
- Maskieren eines Teils des Trägermaterials in einem Bereich, der sich an ein Ende des Wellenleiterkerns anschließt,
- Strukturieren der gekrümmten Rampe in dem Trägermaterial durch einen isotropen Ätzprozess in einer Umgebung des genannten Endes des Wellenleiterkerns,
- Beschichten der Rampe mit dem Wellenleitermaterial, so dass das Wellenleitermaterial ein vom Substrat weg gekrümmtes Wellenleiterstück zum Ein- oder Auskoppeln von Licht bildet, das den Wellenleiterkern fortsetzt.

Bei dem zuletzt beschriebenen Verfahrensschritt können andere Bereiche der entstehenden Wellenleiteranordnung zweckmäßigerweise maskiert werden, damit - gegebenenfalls nach einem Entfernen von Maskierungsmaterial - nur auf der Rampe das Wellenleitermaterial verbleibt, das dort das den Wellenleiterkern fortsetzende Wellenleiterstück bildet. Um die gekrümmte Rampe aus dem Trägermaterial zu formen, kann das Strukturieren des letzteren z.B. durch Plasmaoxidation erfolgen, wenn das Trägermaterial ein Polymer ist, oder durch Nassätzen, wenn das Trägermaterial durch SiO₂ gegeben ist.

Ausführungsbeispiele der Erfindung werden nachfolgend anhand der Figuren 1 bis 7 erläutert. Es zeigen
- Fig. 1: einen Querschnitt durch einen Teil einer integrierten Optik,
- Fign. 2 bis 6: in einer der Figur 1 entsprechenden Darstellung den entsprechenden Teil der integrierten Optik aus Figur 1 in verschiedenen aufeinander folgenden Stadien eines Verfahrens zur Herstellung dieser integrierten Optik und
- Fig. 7: in entsprechender Darstellung einen Teil einer integrierten Optik in einer anderen Ausführung der Erfindung.

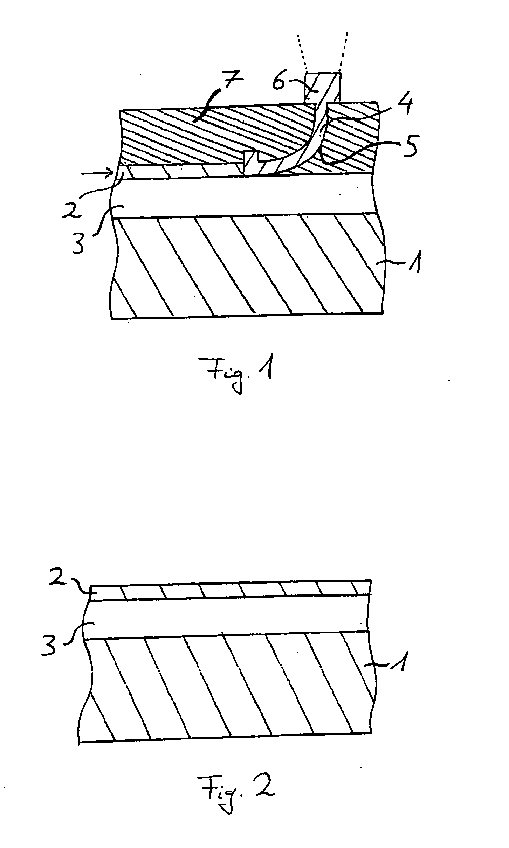

Die integrierte Optik, von der in Figur 1 nur ein Teil mit einem zum Ein- und Auskoppeln von Licht vorgesehenen Ende eines Wellenleiters abgebildet ist, bildet eine auf einem Substrat 1 aufgebaute Wellenleiteranordnung. Dieses Substrat 1 ist durch einen Teil eines Siliziumwafers gegeben, der erst am Ende des Herstellungsverfahrens zur Bildung der integrierten Optik in eine Vielzahl gleichartiger integrierter Optiken getrennt wird.

Das Substrat 1 trägt mindestens einen Wellenleiter mit einem Wellenleiterkern 2, der durch eine Pufferschicht 3 von dem Substrat 1 getrennt ist. Die Pufferschicht 3 ist bei dem vorliegenden Ausführungsbeispiel aus SiO₂ gebildet, während der Wellenleiterkern 2 aus kristallinem Silizium besteht und einen Durchmesser von etwa 0,3 µm sowohl in lateraler Richtung als auch in einer zum Substrat 1 senkrechten Richtung hat. Der Wellenleiter bildet damit einen Einmoden-Wellenleiter.

Der Wellenleiter weist ein in Figur 1 abgebildetes Ende zum Ein- oder Auskoppeln von Licht auf. Dort ist der Wellenleiterkern 2 durch ein vom Substrat 1 weg gekrümmt verlaufendes Wellenleiterstück 4 fortgesetzt, das auf einer entsprechend gekrümmten Rampe 5 ruht. Diese Rampe 5 füllt einen Zwischenraum zwischen dem Wellenleiterstück 4 und der Pufferschicht 3 vollständig aus. Das Wellenleiterstück 4 hat einen Verlauf mit einem Krümmungsradius von etwa 2 µm und ist so geführt, dass ein dem Wellenleiterkern 2 abgewandtes, vom Substrat 1 weg weisendes Ende 6 des Wellenleiterstücks 4 senkrecht auf dem Substrat 1 steht und dort durch eine zum Substrat 1 parallele Koppelfläche abgeschlossen wird. Dieses Ende 6 verläuft also in eine gegenüber dem zum Substrat 1 parallel verlaufenden Wellenleiterkern 2 und relativ zur Pufferschicht 3 um 90° gedrehte Richtung. Bei dem vorliegenden Ausführungsbeispiel ist das Wellenleiterstück dort aufgeweitet, um ein Ein- oder Auskoppeln von Licht mit möglichst geringen Verlusten zu erleichtern.

Die Rampe 5 ist aus Benzozyklobuten gebildet. Stattdessen kann auch ein anderes Polymer zur Bildung der Rampe 5 verwendet. Schließlich ist es auch möglich, die Rampe 5 stattdessen aus SiO₂ oder einem Fotolack zu bilden. In jedem Fall hat ein die Rampe 5 bildendes Material einen kleineren Brechungsindex als das den Wellenleiterkern 2 fortsetzenden Wellenleiterstück 4.

Beim vorliegenden Ausführungsbeispiel ist das Wellenleiterstück 4 aus amorphem Silizium gebildet. Stattdessen könnte auch ein anderes Wellenleitermaterial verwendet werden, das einen dem Wellenleiterkern 2 möglichst ähnlichen Brechungsindex haben sollte. Sowohl der Wellenleiterkern 2 als auch das Wellenleiterstück 4 sollte dabei insbesondere einen Brechungsindex von zwischen 1,5 und 4 haben.

Schließlich ist der Wellenleiterkern 2 und das Wellenleiterstück 4 eingebettet in eine sie abdeckende Deckschicht 7, die aus dem gleichen Material gebildet sein kann wie die Rampe 5.

Die Figuren 2 bis 6 veranschaulichen das Herstellungsverfahren der in Figur 1 nur in einem Ausschnitt abgebildeten integrierten Optik. Bei diesem Herstellungsverfahren wird zunächst zur Bildung mindestens eines Wellenleiters der Wellenleiterkern 2 auf der den Wellenleiterkern vom Substrat 1 trennenden Pufferschicht 3 angeordnet. Dazu kann zunächst eine ganze Wellenleiterschicht aus Silizium über der Pufferschicht 1 gebildet und anschließend so strukturiert werden, dass der Wellenleiterkern 2, der in den Figuren als Längsschnitt erkennbar ist, in gewünschter Weise lateral begrenzt wird. Ein Ergebnis dieser Verfahrensschritte ist in Figur 2 zu erkennen. In entsprechender Weise können natürlich eine Vielzahl von Wellenleitern vorgesehen werden, die eine komplexe optische Schaltung bilden können.

Zur Bildung einer optischen Schnittstelle, die durch das in Figur 1 abgebildete Ende des Wellenleiters mit dem Wellenleiterstück 4 gebildet wird und die zum Ein- oder Auskoppeln von Licht in den Wellenleiter dient, werden dann die nachfolgend beschriebenen Schritte durchgeführt.

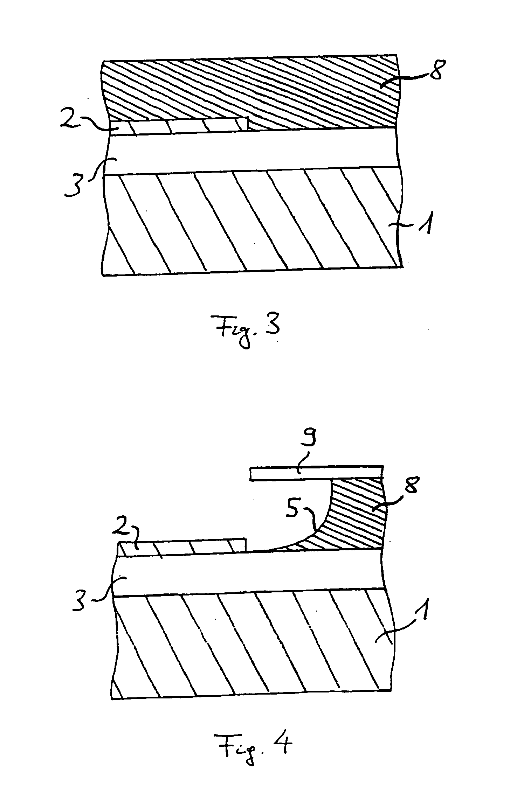

An dem genannten Ende des Wellenleiters wird durch Entfernen eines Teils des Wellenleiterkerns ein Anschlussfeld freigelegt, so dass eine in Figur 3 dargestellte Struktur entsteht.

Im Bereich des Anschlussfelds wird ein strukturierbares Trägermaterial 8 auf die Pufferschicht 3 aufgebracht, das beim vorliegenden Ausführungsbeispiel durch Benzozyklobuten gegeben ist. An Stelle dessen kann auch ein anderes Polymer oder SiO₂ verwendet werden. In einer weiteren Abwandlung wird ein Fotolack als Trägermaterial 8 verwendet. Damit erhält der entsprechende Ausschnitt der entstehenden integrierten Optik einen in Figur 3 abgebildeten Querschnitt.

Anschließend wir ein Teil des Trägermaterials 8 durch Aufbringen einer in Figur 4 erkennbaren Maske 9 maskiert, und zwar derart, dass das Trägermaterial 8 an einem dem Wellenleiterkern 2 zugewandten Ende des Anschlussfeldes frei zugänglich bleibt. Durch einen isotropen Ätzprozess wird dann an dem genannten Ende des Anschlussfeldes die gekrümmte Rampe 5 aus dem Trägermaterial 8 gebildet. Das kann z.B. durch Plasmaoxidation geschehen, auch bei Abwandlungen, bei denen andere Polymere für das Trägermaterial 8 verwendet werden. wenn SiO₂ als das Trägermaterial 8 verwendet wird, kann das Strukturieren der Rampe 5 durch Nassätzen erfolgen. Ein Ergebnis des zuletzt beschriebenen Verfahrensschrittes ist in Figur 4 abgebildet.

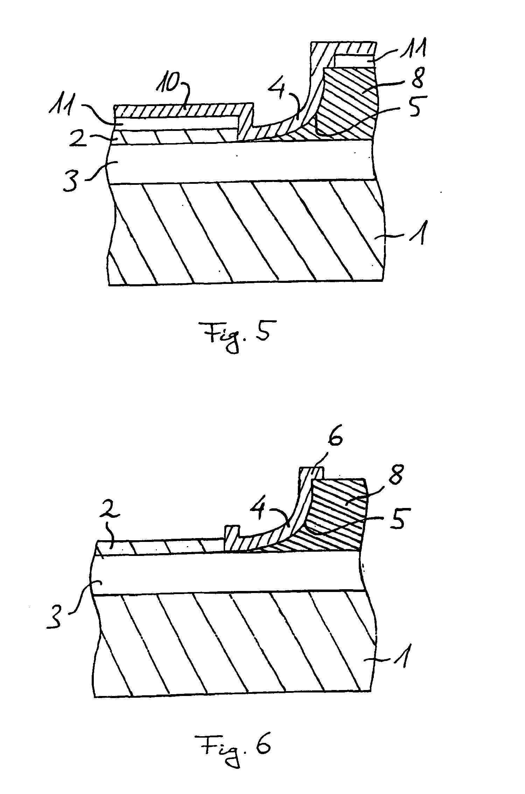

Danach wird die Rampe 5 in einem in Figur 5 dargestellten Verfahrensschritt mit amorphem Silizium als Wellenleitermaterial 10 beschichtet, das das vom Substrat 1 weg gekrümmte, den Wellenleiterkern 2 fortsetzende Wellenleiterstück 4 zum Ein- oder Auskoppeln von Licht bildet. Dazu werden andere Bereiche der entstehenden integrierten Optik durch weitere Masken 11 abgedeckt. Diese werden anschließend zusammen mit überschüssigen Mengen des Wellenleitermaterials 10 entfernt, so dass davon nur das auf der Rampe 5 ruhende Wellenleiterstück 4 zurückbleibt, was in Figur 6 zu erkennen ist. Dabei eventuell noch stehen bleibende Vorsprünge - in Figur 6 z.B. dort zu erkennen, wo das Wellenleiterstück 4 am Wellenleiterkern 2 ansetzt - sollten so weit wie möglich reduziert werden, um sicherzustellen, dass ihr Einfluss auf optische Eigenschaften des Wellenleiters vernachlässigbar ist.

Schließlich wird der Wellenleiterkern 2 und das Wellenleiterstück 4 mit einem Material abgedeckt, das dem Trägermaterial 8 entsprechen kann, so dass die in Figur 1 erkennbare Struktur mit der Deckschicht 7 entsteht. Dort ist durch einen Pfeil veranschaulicht, aus welcher Richtung ein Lichtbündel durch den Wellenleiter mit dem Wellenleiterkern 2 propagieren kann, und durch gepunktete Linien ein aus dem Ende 6 austretender Teil dieses Lichtbündels. Der das Substrat 1 bildende Siliziumwafer wird erst jetzt zersägt und dadurch in die integrierten Optiken getrennt.

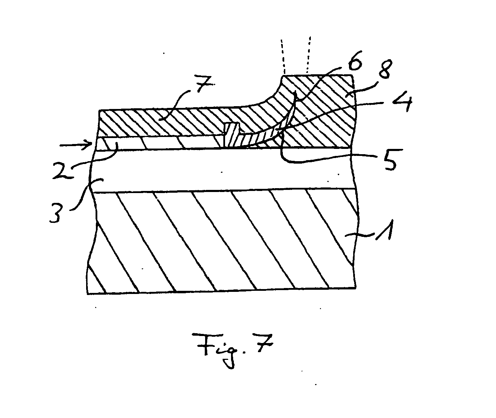

Eine Abwandlung des Ausführungsbeispiels aus Figur 1 ist in Figur 7 dargestellt, wobei wiederkehrende Merkmale wieder mit denselben Bezugszeichen versehen sind und nicht mehr eigens erläutert werden. Von dem zuvor beschriebenen Ausführungsbeispiel unterscheidet sich die Abwandlung aus Figur 7 lediglich dadurch, dass das vollständig zwischen dem Trägermaterial 8 und der Deckschicht 7 eingebettete Wellenleiterstück 4 zum dem Wellenleiterkern 2 abgewandten Ende 6 hin verjüngt ausgeführt ist. Dadurch wird eine Aufweitung eines aus dem Wellenleiterkern 2 austretenden Lichtbündels erreicht, was z.B. eine verlustarme Auskopplung in eine Glasfaser größeren Durchmessers erlaubt. Bei der Herstellung kann das erreicht werden, indem Prozessparameter so eingestellt werden, dass eine laterale Depositionsrate geringer ausfällt als eine vertikale Depositionsrate. Die sich verjüngende Form des Wellenleiterstücks 4 führt dazu, dass ein das Lichtbündel bildende elektromagnetische Feld aus dem Wellenleiterstück 4 heraus in das umgebende Trägermaterial 8 bzw. die Deckschicht 7 gedrängt wird.

Die vorgeschlagenen Maßnahmen sind mit einer erweiterten CMOS-Technologie kompatibel und erlauben ein praktisches On-Wafer-Processing. Aufwendige Präparationen optischer Facetten auf Barrenebene erübrigen sich in vorteilhafter Weise. Auch können die entstehenden optischen Schaltungen oder Komponenten davon bereits in einem On-Wafer-Test geprüft werden. Die so gebildete optische Schnittstelle kann außerdem breitbandig genutzt werden. In einer Weiterbildung kann die vorgeschlagene Wellenleiteranordnung auch ein dreidimensionales Modul bilden.

Verwendet werden kann eine optische Schnittstelle, die in beschriebener Weise gebildet ist, z.B. zum Ein- oder Auskoppeln in oder aus Glasfasern oder zum Montieren vertikal emittierender Laser oder von Photodioden oder signalverarbeitenden optischen Komponenten, beispielsweise optischen Modulatoren, in Flip-Chip-Technik.

## Patentansprüche

1. Wellenleiteranordnung, umfassend ein Substrat (1), eine auf dem Substrat (1) angeordnete optische Pufferschicht (3) und mindestens einen auf der Pufferschicht (3) angeordneten Wellenleiter mit einem parallel zur Pufferschicht (3) verlaufenden Wellenleiterkern (2), wobei der mindestens eine Wellenleiter mindestens ein Ende zum Ein- oder Auskoppeln von Licht aufweist und wobei der Wellenleiterkern (2) an dem genannten Ende fortgesetzt ist durch ein Wellenleiterstück (4), das oberhalb des selben Substrats (1) aus einer durch das Substrat (1) definierten Ebene herausgekrümmt verläuft und an einem vom Substrat (1) weg weisenden Ende durch eine Koppelfläche abgeschlossen wird,
**dadurch gekennzeichnet,**
**dass** das Wellenleiterstück (4) auf einer einem Verlauf des Wellenleiterstücks (4) entsprechend gekrümmten Rampe (5) ruht, die einen zwischen dem Wellenleiterstück (4) und der Pufferschicht (3) oder dem Substrat (1) verbleibenden Zwischenraum vollständig ausfüllt, wobei ein die Rampe (5) bildendes Material einen kleineren Brechungsindex hat als das Wellenleiterstück (4) und wobei das Wellenleiterstück (4) ringsum eingebettet ist.

2. Wellenleiteranordnung nach Anspruch 1, **dadurch gekennzeichnet, dass** der Wellenleiterkern (2) aus einer auf der Pufferschicht (3) angeordneten Wellenleiterschicht gebildet ist.

3. Wellenleiteranordnung nach einem der Ansprüche 1 oder 2, **dadurch gekennzeichnet, dass** das Wellenleiterstück (4) einen Krümmungsradius von zwischen 1 µm und 10 µm hat.

4. Wellenleiteranordnung nach einem der Ansprüche 1 bis 3, **dadurch gekennzeichnet, dass** ein vom Substrat (1) weg weisendes Ende des Wellenleiterstücks (4) mit einer Normalen des Substrats (1) einen Winkel von höchstens 10° einschließt.

5. Wellenleiteranordnung nach Anspruch 1 bis 4, **dadurch gekennzeichnet, dass** das Substrat (1) durch einen Wafer oder einen Teil eines Wafers gebildet ist.

6. Wellenleiteranordnung nach einem der Ansprüche 1 bis 5, **dadurch gekennzeichnet, dass** das Substrat (1) aus Silizium oder einem anderen Halbleiter gebildet ist.

7. Wellenleiteranordnung nach einem der Ansprüche 1 bis 6, **dadurch gekennzeichnet, dass** die Pufferschicht (3) aus SiO₂ oder einem anderen Dielektrikum, das einen kleineren Brechungsindex hat als der Wellenleiterkern (2), gebildet ist.

8. Wellenleiter nach einem der Ansprüche 1 bis 7, **dadurch gekennzeichnet, dass** der Wellenleiterkern (2) aus kristallinem Silizium und das ihn fortsetzende Wellenleiterstück (4) aus amorphem Silizium gebildet ist.

9. Wellenleiteranordnung nach einem der Ansprüche 1 bis 8, **dadurch gekennzeichnet, dass** der Wellenleiterkern (2) einen Durchmesser in einer zum Substrat senkrechten Richtung und/oder einen lateralen Durchmesser von zwischen 0,1 µm und 0,5 µm hat.

10. Wellenleiteranordnung nach einem der Ansprüche 1 bis 9, **dadurch gekennzeichnet, dass** die Rampe (5) aus SiO₂ oder einem Photolack oder Benzozyklobuten oder einem anderen Polymer gebildet ist und einen kleineren Brechungsindex hat als das den Wellenleiterkern (2) fortsetzende Wellenleiterstück (4).

11. Wellenleiteranordnung nach einem der Ansprüche 1 bis 10, **dadurch gekennzeichnet, dass** sich das Wellenleiterstück (4) zu einem dem Wellenleiterkern (2) abgewandten Ende (6) hin verjüngt.

12. Wellenleiteranordnung nach einem der Ansprüche 1 bis 11, **dadurch gekennzeichnet, dass** das Wellenleiterstück (4) und/oder der Wellenleiterkern (2) abgedeckt ist durch ein Material, das einen kleineren Brechungsindex hat als der Wellenleiterkern (2) und das Wellenleiterstück (4).

13. Integrierte Optik, enthaltend eine Wellenleiteranordnung nach einem der Ansprüche 1 bis 12.

14. Herstellungsverfahren für ein optisches Bauelement, das eine Wellenleiteranordnung nach einem der Ansprüche 1 bis 12 oder eine integrierte Optik nach Anspruch 13 bildet, bei dem zur Bildung mindestens eines Wellenleiters ein Wellenleiterkern (2) auf einer den Wellenleiterkern (2) von einem Substrat (1) trennenden Pufferschicht (3) angeordnet wird und folgende Schritte zur Bildung einer optischen Schnittstelle zum Ein- oder Auskoppeln von Licht in den Wellenleiter durchgeführt werden:
- Strukturieren einer gekrümmten Rampe (5) in dem Substrat (1) und/oder in einem zuvor auf dem Substrat (1) aufgetragenen strukturierbaren Trägermaterial (8) durch einen Ätzprozess,
- Beschichten der Rampe (5) mit einem Wellenleitermaterial (10), so dass das Wellenleitermaterial (10) ein Wellenleiterstück (4) zum Ein- oder Auskoppeln von Licht bildet, das aus einer durch das Substrat (1) definierten Ebene herausgekrümmt verläuft und den Wellenleiterkern (2) fortsetzt.

15. Verfahren nach Anspruch 14, **dadurch gekennzeichnet**, das zur Bildung der optischen Schnittstelle zum ein- und Auskoppeln von Licht in den Wellenleiter folgende Schritte durchgeführt werden:
- Aufbringen eines strukturierbaren Trägermaterials (8) über dem Substrat (1),
- Maskieren eines Teils des Trägermaterials (8) in einem Bereich hinter einem Ende des Wellenleiterkerns (2),
- Strukturieren der gekrümmten Rampe (5) in dem Trägermaterial (8) durch einen isotropen Ätzprozess in einer Umgebung des genannten Endes des Wellenleiterkerns (2),
- Beschichten der Rampe (5) mit dem Wellenleitermaterial (10), so dass das Wellenleitermaterial (10) ein vom Substrat (1) weg gekrümmtes Wellenleiterstück (4) zum Ein- oder Auskoppeln von Licht bildet, das den Wellenleiterkern (2) fortsetzt.

## Claims

1. A waveguide arrangement, comprising a substrate (1), an optical buffer layer (3) arranged on the substrate (1) and at least one waveguide arranged on the buffer layer (3), with a waveguide core (2) extending parallel to the buffer layer (3), the at least one waveguide having at least one end for the coupling in or out of light and the waveguide core (2) being continued at the aforementioned end by a waveguide piece (4) which extends above the same substrate (1) curved out of a plane defined by the substrate (1) and is closed at an end facing away from the substrate (1) by a coupling surface, **characterised in that** the waveguide piece (4) lies on a ramp (5) which is curved corresponding to a path of the waveguide piece (4), which ramp completely fills an intermediate space remaining between the waveguide piece (4) and the buffer layer (3) or the substrate (1), a material which forms the ramp (5) having a lower refractive index than the waveguide piece (4) and the waveguide piece (4) being embedded all around.

2. A waveguide arrangement according to Claim 1, **characterised in that** the waveguide core (2) is formed from a waveguide layer arranged on the buffer layer (3).

3. A waveguide arrangement according to one of Claims 1 or 2, **characterised in that** the waveguide piece (4) has a radius of curvature of between 1 µm and 10 µm.

4. A waveguide arrangement according to one of Claims 1 to 3, **characterised in that** an end of the waveguide piece (4) which points away from the substrate (1) encloses an angle of at most 10° with a normal of the substrate (1).

5. A waveguide arrangement according to Claims 1 to 4, **characterised in that** the substrate (1) is formed by a wafer or part of a wafer.

6. A waveguide arrangement according to one of Claims 1 to 5, **characterised in that** the substrate (1) is formed from silicon or another semiconductor.

7. A waveguide arrangement according to one of Claims 1 to 6, **characterised in that** the buffer layer (3) is formed from SiO₂ or another dielectric which has a lesser refractive index than the waveguide core (2).

8. A waveguide according to one of Claims 1 to 7, **characterised in that** the waveguide core (2) is formed from crystalline silicon and the waveguide piece (4) which continues it is formed from amorphous silicon.

9. A waveguide arrangement according to one of Claims 1 to 8, **characterised in that** the waveguide core (2) has a diameter in a direction perpendicular to the substrate and/or a lateral diameter of between 0.1 µm and 0.5 µm.

10. A waveguide arrangement according to one of Claims 1 to 9, **characterised in that** the ramp (5) is formed from SiO₂ or a photoresist or benzocyclobutene or another polymer, and has a lesser refractive index than the waveguide piece (4) which continues the waveguide core (2).

11. A waveguide arrangement according to one of Claims 1 to 10, **characterised in that** the waveguide piece (4) tapers towards an end (6) remote from the waveguide core (2).

12. A waveguide arrangement according to one of Claims 1 to 11, **characterised in that** the waveguide piece (4) and/or the waveguide core (2) is covered by a material which has a lesser refractive index than the waveguide core (2) and the waveguide piece (4).

13. An integrated optical system, containing a waveguide arrangement according to one of Claims 1 to 12.

14. A production method for an optical component which forms a waveguide arrangement according to one of Claims 1 to 12 or an integrated optical system according to Claim 13, in which for the formation of at least one waveguide a waveguide core (2) is arranged on a buffer layer (3) which separates the waveguide core (2) from a substrate (1) and the following steps for the formation of an optical interface for coupling light into or out of the waveguide are carried out:
- structuring a curved ramp (5) in the substrate (1), and/or in a structurable support material (8) previously applied to the substrate (1), by an etching process,
- coating the ramp (5) with a waveguide material (10), so that the waveguide material (10) forms a waveguide piece (4) for the coupling in or out of light, which piece extends curved out of a plane defined by the substrate (1) and continues the waveguide core (2).

15. A method according to Claim 14, **characterised in that** the following steps are carried out for the formation of the optical interface for coupling light into and out of the waveguide:
- applying a structurable support material (8) over the substrate (1),
- masking part of the support material (8) in a region behind one end of the waveguide core (2),
- structuring of the curved ramp (5) in the support material (8) by an isotropic etching process in a region surrounding the aforementioned end of the waveguide core (2),
- coating the ramp (5) with the waveguide material (10), so that the waveguide material (10) forms a waveguide piece (4), curved away from the substrate (1), for the coupling in or out of light, which piece continues the waveguide core (2).

## Revendications

1. Dispositif de guide d'onde, comprenant un substrat (1), une couche tampon optique (3) disposée sur le substrat (1) et au moins un guide d'onde disposé sur la couche tampon (3) avec un coeur du guide d'onde (2) au tracé parallèle à la couche tampon (3), dans lequel le au moins un guide d'onde présente au moins une extrémité pour le couplage ou le découplage de lumière et dans lequel le coeur du guide d'onde (2) se prolonge à ladite extrémité par un élément de guide d'onde (4), qui, au-dessus de ce même substrat (1), parcourt un tracé en courbe sortant d'un plan déterminé par le substrat (1) et se termine, à une extrémité opposée au substrat (1), par une surface de couplage,
**caractérisé en ce que**
l'élément de guide d'onde (4) repose sur une rampe courbée (5) correspondant à un tracé de l'élément de guide d'onde (4), laquelle remplit complètement un interstice restant entre l'élément de guide d'onde (4) et la couche tampon (3) ou le substrat (1), dans lequel un matériau formant la rampe (5) présente un indice de réfraction inférieur à celui de l'élément de guide d'onde (4) et dans lequel l'élément de guide d'onde (4) est encastré de tous les côtés.

2. Dispositif de guide d'onde selon la revendication 1, **caractérisé en ce que** le coeur du guide d'onde (2) est constitué d'une couche de guide d'onde disposée sur la couche tampon (3).

3. Dispositif de guide d'onde selon l'une quelconque des revendications 1 ou 2, **caractérisé en ce que** l'élément de guide d'onde (4) a un rayon de courbure compris entre 1 µm et 10 µm.

4. Dispositif de guide d'onde selon l'une quelconque des revendications 1 à 3, **caractérisé en ce qu'**une extrémité de l'élément de guide d'onde (4) qui est opposée au substrat (1) forme, avec une normale du substrat (1), un angle de 10° au maximum.

5. Dispositif de guide d'onde selon la revendication 1 à 4, **caractérisé en ce que** le substrat (1) est constitué d'un wafer ou d'une partie de wafer.

6. Dispositif de guide d'onde selon l'une quelconque des revendications 1 à 5, **caractérisé en ce que** le substrat (1) est constitué de silicium ou d'un autre semi-conducteur.

7. Dispositif de guide d'onde selon l'une quelconque des revendications 1 à 6, **caractérisé en ce que** la couche tampon (3) est constituée de SiO₂ ou d'un autre diélectrique qui a un indice de réfraction inférieur à celui du coeur du guide d'onde (2).

8. Guide d'onde selon l'une quelconque des revendications 1 à 7, **caractérisé en ce que** le coeur du guide d'onde (2) est constitué de silicium cristallin et **en ce que** l'élément de guide d'onde qui est le prolongement du premier (4) est constitué de silicium amorphe.

9. Dispositif de guide d'onde selon l'une quelconque des revendications 1 à 8, **caractérisé en ce que** le coeur du guide d'onde (2) a un diamètre dans un sens perpendiculaire au substrat et/ou un diamètre latéral compris entre 0,1 µm et 0,5 µm.

10. Dispositif de guide d'onde selon l'une quelconque des revendications 1 à 9, **caractérisé en ce que** la rampe (5) est constituée de SiO₂ ou d'une résine photosensible ou de benzocyclobutène ou d'un autre polymère et possède un indice de réfraction inférieur à celui de l'élément de guide d'onde (4) prolongeant le coeur du guide d'onde (2).

11. Dispositif de guide d'onde selon l'une quelconque des revendications 1 à 10, **caractérisé en ce que** l'élément de guide d'onde (4) s'effile vers une extrémité (6) opposée au coeur du guide d'onde (2).

12. Dispositif de guide d'onde selon l'une quelconque des revendications 1 à 11, **caractérisé en ce que** l'élément de guide d'onde (4) et/ou le coeur du guide d'onde (2) est/sont recouvert(s) d'un matériau qui a un indice de réfraction inférieur à celui du coeur du guide d'onde (2) et de l'élément de guide d'onde (4).

13. Système optique intégré, contenant un dispositif de guide d'onde selon l'une quelconque des revendications 1 à 12.

14. Procédé de fabrication pour un composant optique, qui forme un dispositif de guide d'onde selon l'une quelconque des revendications 1 à 12 ou un système optique intégré selon la revendication 13, dans lequel, pour la constitution d'au moins un guide d'onde, un coeur du guide d'ondes (2) est disposé sur une couche tampon (3) séparant le coeur du guide d'onde (2) d'un substrat (1) et où l'on effectue les étapes suivantes pour former une interface optique destinée au couplage ou au découplage de lumière vers le guide d'onde :
- structuration d'une rampe courbée (5) dans le substrat (1) et/ou dans un matériau de support (8) structurable et préalablement appliqué sur le substrat (1) par un procédé de gravure,
- revêtement de la rampe (5) d'un matériau de guide d'onde (10), de sorte que le matériau du guide d'onde (10) forme un élément de guide d'onde (4) pour le couplage ou le découplage de lumière, lequel élément parcourt un tracé en courbe sortant d'un plan déterminé par le substrat (1) et prolonge le coeur du guide d'onde (2).

15. Procédé selon la revendication 14, **caractérisé en ce que**, pour former l'interface optique destinée au couplage et au découplage de lumière vers le guide d'onde, on réalise les étapes suivantes :
- application d'un matériau de support structurable (8) par-dessus le substrat (1),
- masquage d'une partie du matériau de support (8) dans une zone située derrière une extrémité du coeur du guide d'onde (2),
- structuration de la rampe courbée (5) dans le matériau de support (8) par un procédé de gravure isotrope dans un entourage de ladite extrémité du coeur du guide d'onde (2),
- revêtement de la rampe (5) du matériau de guide d'onde (10), de sorte que le matériau du guide d'onde (10) constitue un élément de guide d'onde (4) en forme de courbe s'éloignant du substrat pour le couplage ou le découplage de lumière, lequel élément prolonge le noyau de guide d'onde (2).
